# EUROPEAN PATENT SPECIFICATION

(11) **EP 3 825 720 B1**
(45) Date of publication and mention of the grant of the patent: **27.03.2024**
(21) Application number: 19210183.0
(22) Date of filing: 19.11.2019
(51) Int. Cl.: G01S 7/42, G01S 7/497, G01S 17/89

(54) **LASER SCANNER WITH CALIBRATION FUNCTIONALITY**
LASERSCANNER MIT KALIBRIERUNGSFUNKTIONALITÄT
SCANNER LASER AVEC FONCTIONNALITÉ D'ÉTALONNAGE

(43) Date of publication of application: 26.05.2021
(73) Proprietor: Leica Geosystems AG, 9435 Heerbrugg (CH)
(72) Inventor: NIKLAUS, Christian, CH-7310 Bad Ragaz (CH); HERBST, Christoph, A-6850 Dornbirn (AT)
(74) Representative: Kaminski Harmann

(56) References cited:
- US-A1- 2015 226 840
- US-A1- 2018 052 233
- US-A1- 2018 313 942
- Leica Geosystems Ag: "Check & Adjust Calibration for Leica total stations and MultiStations", , 30 May 2017 (2017-05-30), XP55947401, Retrieved from the Internet: URL:https://www.youtube.com/watch?v=M3AiCE 5-iGU&t=324s [retrieved on 2022-07-29]

## Description

### FIELD OF THE INVENTION

The present invention relates to a laser scanner with a calibration functionality.

### BACKGROUND OF THE INVENTION

Laser scanning is used to survey many different settings such as construction sites, historical buildings, industrial facilities or any other applicable setting. The laser scans achieved therewith may be used to obtain accurate three-dimensional (3D) models of a setting, wherein the models consist of a cloud of points.

Common laser scanners comprise a unit for sending out and receiving the reflected light signals in order to measure the distance of a point the signal was directed at. Usually, these scanners furthermore comprise means to rotatably alter the direction of the signals, commonly a vertical rotation axis and a horizontal rotation axis, of which one may be a slow axis and the other one may be a fast axis, wherein both axes are sensed with angle sensors. US 2018/052233 A1 discloses a prior art system and discloses a loop closure algorithm used for correcting errors when registering a plurality of point clouds acquired from different positions. For this, a 2D scanner is used in addition to the 3D scanner.

The points of the point cloud may be achieved with distance values and solid angles, wherein the laser scanner defines the origin. The distances may be calculated with the travel time measurement method by observing the time between sending out and receiving a signal. The solid angles are obtained with said angle sensors tracking respective rotations around the vertical axis and around the horizontal axis.

### OBJECT OF THE INVENTION

The invention provides an improved laser scanner with a calibration functionality. In particular, the calibration functionality according to the invention allows for a simpler, more accurate, more intuitive, and more ergonomic calibration process.

### SUMMARY OF THE INVENTION

The invention relates to a laser scanner comprising a base, a body mounted on the base, a first motor configured for rotating the body relative to the base around an azimuth axis with a first speed, a first angle encoder configured for determining a first angle of the body with respect to the azimuth axis, an emitter configured for emitting a transmission beam, a receiver configured for detecting a reception beam, a deflector mounted in the body and configured for deflecting the transmission beam from the emitter towards a setting, deflecting the reception beam from the setting to the receiver, a second motor configured for rotating the deflector relative to the body around an elevation axis with a second speed, the second speed being higher than the first speed, a second angle encoder configured for determining a second angle of the deflector with respect to the elevation axis, a processor configured for determining a distance based on the emitted transmission beam and the detected reception beam, determining a point based on the first angle, the second angle, and the determined distance, wherein the processor is further configured for determining a plurality of first calibration points of a first calibration area of the setting in a first face, determining a plurality of second calibration points of the first calibration area in a second face, determining a first deviation between at least part of the first calibration area as determined with the first calibration points and at least part of the first calibration area as determined with the second calibration points, and based on the first deviation, determining first calibration parameters, wherein determining the point is further based on the first calibration parameters.

Determining the first deviation may be based on an offset between a first surface and a second surface, wherein the first surface is based on the first calibration points and the second surface is based on the second calibration points.

The first surface may run through at least some of the first calibration points.

The second surface may run through at least some of the second points.

The processor may be configured for fitting a first plane in at least part of the first calibration points, wherein the first surface is the first plane.

The processor may be configured for fitting a second plane in at least part of the second calibration points, wherein the second surface is the second plane.

The processor may be configured to determine an angle between the first plane and the second plane, wherein the calibrating is further based on the angle.

According to the invention the first face differs from the second face in a shift of 180° of an azimuthal alignment of the body.

The processor may further be configured for (a) determining, in particular with a full dome scan, a plurality of first discovery points of a discovery area of the setting in the first face, wherein the discovery area comprises the first calibration area, in particular wherein the first discovery points comprise the first calibration points, (b) determining at least a first calibration area candidate, and (c) generating or receiving a selection of at least the first calibration area out of the calibration area candidates.

Determining the at least one calibration area candidate may be based on an analysis of the discovery points.

The analysis of the discovery points may be based on (a) at least one distribution criterion of the distances and second angles of the respective discovery points located in the calibration area candidate, and/or (b) at least one fitting criterion which concerns a fitting of a plane in at least part of the respective discovery points located in the calibration area candidate.

The selection may be based on a weighting attributed to the calibration area candidate, wherein the processor is configured for determining the weighting based on at least one of: (a) how the respective discovery points located in the calibration area candidate quantitatively meet the at least one distribution criterion, (b) how the respective discovery points located in the calibration area candidate quantitatively meet the at least one fitting criterion, and (c) a measuring quality of the respective discovery points located in the calibration area candidate with respect to a reception beam quality and/or a reception beam intensity.

The processor may further be configured for determining, in particular with a full dome scan, a plurality of second discovery points of the discovery area of the setting in the second face, wherein the second discovery points comprise the second calibration points.

The processor may further be configured for (a) generating or receiving a selection of at least a second calibration area out of the calibration area candidates, (b) determining at least a second calibration area candidate, and (c) generating or receiving a selection of at least the second calibration area out of the calibration area candidates, (d) wherein first discovery points in the second calibration area are defined as third calibration points, (e) determining a plurality of fourth calibration points of the second calibration area in the second face, (f) determining a second deviation between (1) at least part of the second calibration area as determined with the third calibration points and (2) at least part of the second calibration area as determined with the fourth calibration points, and (g) based on the second deviation, determining second calibration parameters, wherein determining the point is further based on the second calibration parameters.

The invention also relates to an automatic calibration method for a laser scanner according to the above description, the method comprising the steps of the laser scanner (a) determining a plurality of calibration points by performing a full dome scan while azimuthally turning the body (in particular by more than 180°, specifically by at least 190°, preferably by at least 200°) such that there is at least one overlapping area in which calibration points determined in a first face overlap (in particular by more than 0°, specifically by at least 10°, preferably by at least 20°) with calibration points determined in a second face, (b) fitting a first plane in at least part of the calibration points in the overlapping area as determined in the first face, (c) fitting a second plane in at least part of the calibration points in the overlapping area as determined in the first face, wherein the first plane and the second plane overlap at least in part from the perspective of the laser scanner, (d) determining a deviation represented by at least one of a distance between the first and second plane and an angle between the first and second plane, (e) based on the deviation, determining calibration parameters, (f) determining measuring points while taking into account the calibration parameters.

### BRIEF DESCRIPTION OF THE DRAWINGS

By way of example only, preferred embodiments of the invention will be described more fully hereinafter with reference to the accompanying figures, wherein:
Figure 1 shows an embodiment of a laser scanner obtaining a 3D point cloud of a room;
Figure 2 shows an embodiment of a laser scanner in a sectional view;
Figure 3 shows a section of a scene recorded from two different faces;
Figure 4 shows a calibration area;
Figures 5 and 6 show two angles α and β that characterise how the two planes from figure 4 are inclined relative to each other;
Figure 7 shows a full dome scan with visualised weightings of the scan points; and
Figure 8 shows several criteria that can be taken into account when generating the weightings to be assigned to the points.

### DETAILED DESCRIPTION OF THE DRAWINGS

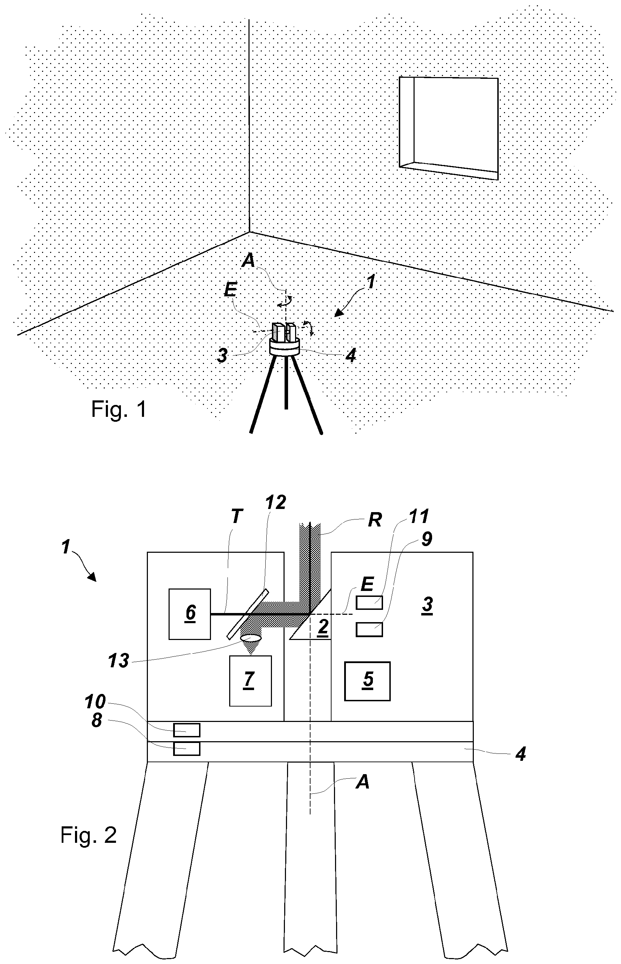

Figure 1 shows a typical indoor measuring situation with a laser scanner 1 placed on a tripod. The laser scanner 1 is shown in figure 2 in greater detail. Such laser scanners are designed to generate a relatively dense 3D point cloud of a scene in a relatively short time. The points are determined in polar coordinates in that a first angle is measured of the current azimuthal rotation, a second angle is measured of the current elevative rotation, and a distance is measured in the current alignment. This is done thousands of times per second, in some cases up to millions of times per second, while the azimuth is changed relatively slowly and the elevation is changed relatively fast. The slow axis is tagged with A for azimuth in figure 1, and the fast axis is tagged with E for elevation.

As indicated by the arrows, the laser scanner 1 is scanning the scene by deflecting a measuring beam with a deflector 2 out of and back into the scanner (it is sent by the emitter 6 towards the scene as a transmission beam T, the reflection of which is received by the receiver 7 as reception beam R by the scanner) while rotating the deflector 2 around the horizontal elevation axis E, and while rotating a body 3 of the laser scanner around the vertical azimuth axis A relative to the base 4. The body 3 is rotated by a first motor 10, and the deflector 2 is rotated by a second motor 11.

A processor 5 is provided to determine the distances by EDM (electronic distance measurement) techniques known from prior art, such as the time of flight (TOF) method. The processor 5 is further provided to receive the angle information from the first angle encoder 8 that determines the first angle with respect to the azimuth axis A, and from the second angle encoder 9 that determines the second angle with respect to the elevation axis E.

The configuration as shown in figure 2 is an example. The emitter 6 is positioned to direct the transmission beam T through a semi-transparent mirror 12 towards the deflector 2. The receiver 7 is positioned to receive the reception beam R that has been first deflected by the deflector 2, then deflected by the semi-transparent mirror 12, and then collimated by the collimator 13.

One reason that the laser scanner has to be calibrated once in a while is the emergence of geometry errors in the azimuth axis and elevation axis after some time due to wear or inappropriate handling (shocks, etc.). Other reasons may originate from mounting errors of the emitter 6, receiver 7, optical elements (such as the semi-transparent mirror 12 or the collimator 13), the deflector 2, the first angle encoder 8, and/or the second angle encoder 9. By means of calibration parameters that are applied to the intrinsic geometry of the laser scanner, such geometry errors can be compensated according to the invention.

Once the body 3 made a turn of more than 180° the laser scanner begins to measure the same points again but from another face. Because of the geometry errors, the points measured in a first face deviate from points measured in a second face. This fact is used by the present invention.

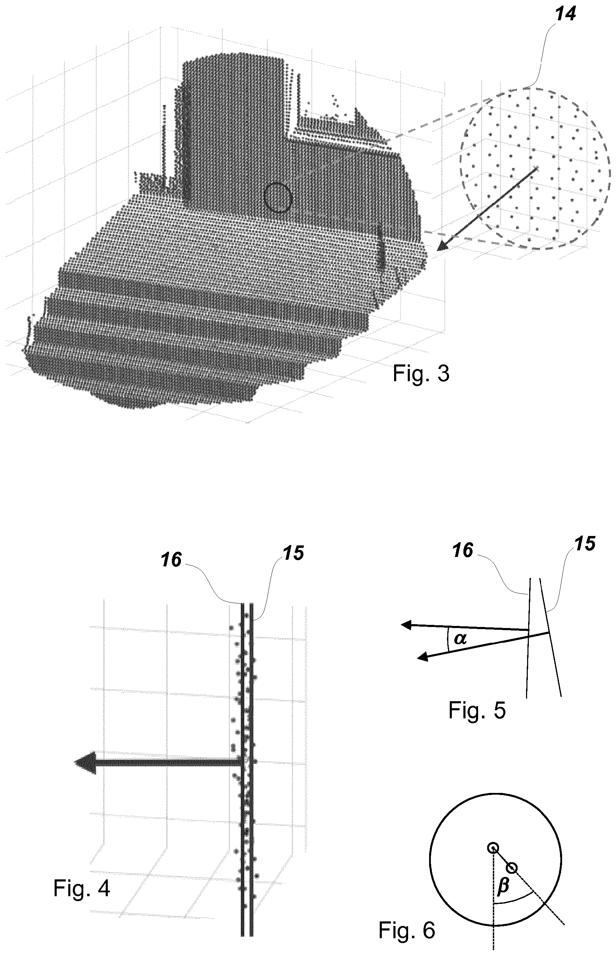

Figure 3 shows a section of a scene recorded from two different faces. This section is the calibration area 14. The two point clouds, i.e. the first calibration points and the second calibration points, cannot be distinguished in this view of the figure, however, figure 4 shows the calibration area 14 which is circled and enlarged in figure 3 from the side, i.e. parallel to the wall, wherein a plane is fitted into each of the point clouds which clearly shows the deviation between the two point clouds.

In the shown example, the first plane 15 and the second plane 16 are used by the processor 5 for determining a deviation between the calibration area as determined with the first calibration points (first face) and the calibration area 14 as determined with the second calibration points (second face). A deviation in this example comprises a distance between the planes 15 and 16 and two angles that characterise how the two planes are inclined relative to each other. These two angles α and β are shown in abstracted and exaggerated views (frontal and lateral) of the two planes in figures 5 and 6.

The distance between the two planes can be determined in different alternative ways. A centre of the calibration area could be used to measure a normal distance. In other embodiments, the distance between the planes could be averaged. In yet further embodiments, a maximum distance throughout the area could be determined, which e.g. would be in figure 5 the distance between of the planes 15 and 16 at their lower ends.

Based on this deviation, the calibration parameters are determined, wherein the calibration parameters are from then on taken into account when determining a new point (cloud) with the laser scanner. This calibration can be done in the field without the need for shipping the scanner to after sales service. In particular, the calibration can be performed automatically upon request of the user, or upon a scheduled triggering. In some embodiments, the calibration can be manually or automatically repeated at least one time in order to further increase the precision resulting from the calibration(s).

In a particular embodiment, more than just one calibration area can be taken into account. Thus, the determination of calibration parameters can either be based on deviations of these calibration areas at once, or the calibration parameters may be determined for the deviations sequentially. In particular, considering calibration areas with different elevation ranges increases the quality of the calibration. The further the calibration areas are apart from each other with respect to elevation, the better is the quality of the calibration.

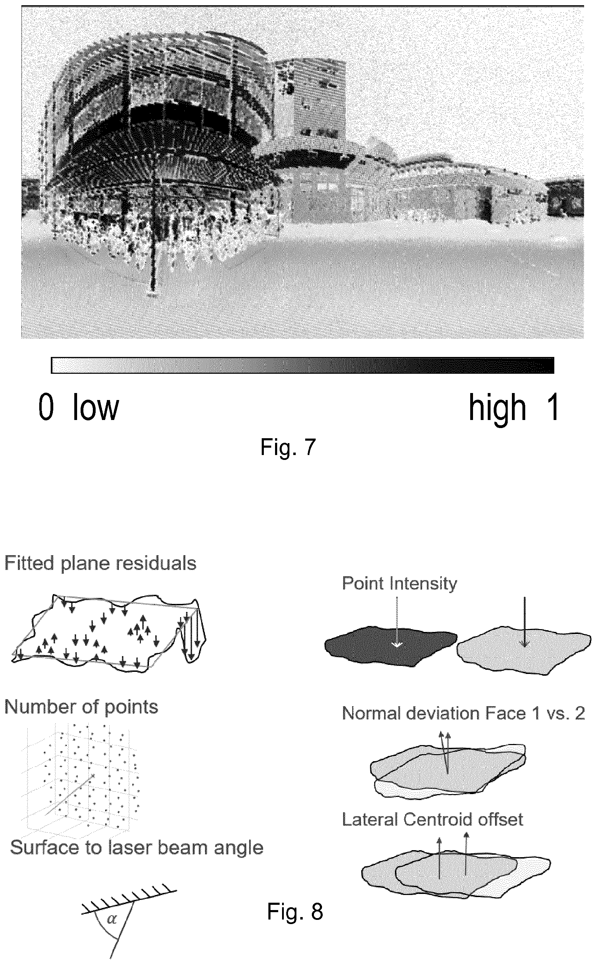

Figure 7 shows a full dome scan made with the laser scanner containing evaluations of the respective points with regard to their suitability for being used for the calibration. The point cloud is hence analysed and the points assigned to a value between 0 (low suitability) and 1 (high suitability). For illustrative purposes, the points more suitable for the calibration are darker in the figure and the lesser suitable points are brighter. In particular, for the calibration, a smoothest possible surface is preferred, specifically a smooth surface that is facing the laser scanner in a 45° inclination angle.

In particular, this full dome scan is obtained in a first face and by determining a plurality of first discovery points of this discovery area of the setting. In figure 7 the discovery area is the full setting, but in other embodiments the discovery area can only be a section of the setting. From the discovery area the processor then determines at least a first calibration area candidate, in particular a plurality of candidates. The processor can then automatically generate a selection or receive a selection made by a user of one of the candidate(s) to be used as calibration area. If there are several candidates selected, then there can also be more than one calibration area to be used for the calibration.

The full dome scan of figure 7 is optional - the above explained process does not necessarily require such a wide area and will also work with smaller areas. The discovery area can also comprise two or more sections of the setting, e.g. four setting windows apart from each other by 90° azimuth.

At least part of the relevant discovery area is then scanned again in the second face, providing second discovery points, i.e. the discovery area is scanned with a support turned by 180°. The processor could either direct the laser scanner to scan the whole discovery area again, or only those parts containing the selected calibration area candidate(s).

The black-and-white evaluation that has been shown with figure 7 does particularly depend on one or more criteria. The evaluation can be seen as "weightage", i.e. the points are assigned to weightings as a result of assessing their suitability of being used for a calibration. Some of those criteria are discussed with figure 8 as follows:

The weighting may depend on how well a plane can be fitted in the candidate area, i.e. the weighting is a measure for the flatness of the points in the candidate area are aligned and/or to what extend there are residuals (fitting criterion).

A further criterion is the amount of points, wherein of course a higher amount is desirable. The more points there are in the neighbourhood, the higher is the weighting of a point. In particular, only considering the amount of points further fulfilling any other certain criterion has also effect on this amount criterion.

The inclination between the surface and the laser beam impinging on the surface can be determined. At an inclination of 45°, the weighting of the points laying on the respective surface may reach a maximum and the more the angle departs from this optimum angle, the lower the weighting may be.

According to a measuring quality criterion, points that are determined with a high intensity return pulse (=high reflectivity of the surface) are preferred such that they get a higher weighting. It also or alternatively may comprise a reception beam quality.

The last two examples require the second scan in the second face in order to produce weightings. Independent of the calibration, the normal deviation between the plane as detected in the first face and the plane as detected in the second face can be taken into account when determining the weightings. Having a relatively high deviation means that this area would have a high impact on the calibration, so that the points in this area can be assigned high weightings. The same is true for lateral offsets of areas detected in the two faces. The lateral deviation can e.g. be determined with help of a feature recognition algorithm.

Not being shown in the figures, the distribution criterion as mentioned in this application is usable to describe the distribution of the discovery points with respect to their distances to the scanner and to their second angles (elevation angles). A smooth distribution of the distance values and a smooth distribution of elevation angles is a direct indicator for smooth surfaces which let the respective points earn a high weighting because they are very suitable candidates for the calibration.

All above mentioned criteria for assigning a weighting to the points can be combined in any constellation.

## Claims

1. A laser scanner (1) comprising
- a base (4),
- a body (3) mounted on the base,
- a first motor (10) configured for rotating the body relative to the base around an azimuth axis (A) with a first speed,
- a first angle encoder (8) configured for determining a first angle of the body with respect to the azimuth axis,
- an emitter (6) configured for emitting a transmission beam (T),
- a receiver (7) configured for detecting a reception beam (R),
- a deflector (2) mounted in the body and configured for
o deflecting the transmission beam from the emitter towards a setting,
o deflecting the reception beam from the setting to the receiver,
- a second motor (11) configured for rotating the deflector relative to the body around an elevation axis (E) with a second speed, the second speed being higher than the first speed,
- a second angle encoder (9) configured for determining a second angle of the deflector with respect to the elevation axis,
- a processor (5) configured for
o determining a distance based on the emitted transmission beam and the detected reception beam,
o determining a point based on the first angle, the second angle, and the determined distance,
**characterised in that**
the processor is further configured for
- determining a plurality of first calibration points of a first calibration area (14) of the setting in a first face,
- determining a plurality of second calibration points of the first calibration area (14) in a second face, wherein the first face differs from the second face in a shift of 180° of an azimuthal alignment of the body (3)
- determining a first deviation between
o at least part of the first calibration area as determined with the first calibration points and
o at least part of the first calibration area as determined with the second calibration points, and
- based on the first deviation, determining first calibration parameters, wherein determining the point is further based on the first calibration parameters.

2. The laser scanner (1) according to claim 1, wherein determining the first deviation is based on an offset between a first surface and a second surface, wherein the first surface is based on the first calibration points and the second surface is based on the second calibration points.

3. The laser scanner (1) according to claim 2, wherein the first surface runs through at least some of the first calibration points.

4. The laser scanner (1) according to claim 2 or 3, wherein the second surface runs through at least some of the second points.

5. The laser scanner (1) according to claim 2, wherein the processor (5) is configured for fitting a first plane (15) in at least part of the first calibration points, wherein the first surface is the first plane.

6. The laser scanner (1) according to claim 2 or 4, wherein the processor (5) is configured for fitting a second plane (16) in at least part of the second calibration points, wherein the second surface is the second plane.

7. The laser scanner (1) according to claims 5 and 6, wherein the processor (5) is configured to determine an angle (α) between the first plane (15) and the second plane (16), wherein the calibrating is further based on the angle.

8. The laser scanner (1) according to any of the preceding claims, wherein the processor (5) is further configured for
- determining, in particular with a full dome scan, a plurality of first discovery points of a discovery area of the setting in the first face, wherein the discovery area comprises the first calibration area (14), in particular wherein the first discovery points comprise the first calibration points,
- determining at least a first calibration area candidate, and
- generating or receiving a selection of at least the first calibration area out of the calibration area candidates.

9. The laser scanner (1) according to claim 8, wherein determining the at least one calibration area candidate is based on an analysis of the discovery points.

10. The laser scanner (1) according to claim 9, wherein the analysis of the discovery points is based on
- at least one distribution criterion of the distances and second angles of the respective discovery points located in the calibration area candidate, and/or
- at least one fitting criterion which concerns a fitting of a plane in at least part of the respective discovery points located in the calibration area candidate.

11. The laser scanner (1) according to claim 10, wherein the selection is based on a weighting attributed to the calibration area candidate, wherein the processor (5) is configured for determining the weighting based on at least one of:
- how the respective discovery points located in the calibration area candidate quantitatively meet the at least one distribution criterion,
- how the respective discovery points located in the calibration area candidate quantitatively meet the at least one fitting criterion, and
- a measuring quality of the respective discovery points located in the calibration area candidate with respect to a reception beam quality and/or a reception beam intensity.

12. The laser scanner (1) according to any of claims 8 to 11, wherein the processor (5) is further configured for
- determining, in particular with a full dome scan, a plurality of second discovery points of the discovery area of the setting in the second face, wherein the second discovery points comprise the second calibration points.

13. The laser scanner (1) according to any of claims 8 to 11, wherein the processor (5) is further configured for
- determining at least a second calibration area candidate, and
- generating or receiving a selection of at least the second calibration area out of the calibration area candidates,
- wherein first discovery points in the second calibration area are defined as third calibration points,
- determining a plurality of fourth calibration points of the second calibration area in the second face,
- determining a second deviation between
o at least part of the second calibration area as determined with the third calibration points and
o at least part of the second calibration area as determined with the fourth calibration points, and
- based on the second deviation, determining second calibration parameters, wherein determining the point is further based on the second calibration parameters.

14. An automatic calibration method for a laser scanner (1) according to any of the preceding claims, the method comprising the steps of the laser scanner
- determining a plurality of calibration points by performing a full dome scan while azimuthally turning the body (3) such that there is at least one overlapping area in which calibration points determined in a first face overlap with calibration points determined in a second face, wherein the first face differs from the second face in a shift of 180° of an azimuthal alignment of the body (3),
- fitting a first plane (15) in at least part of the calibration points in the overlapping area as determined in the first face,
- fitting a second plane (16) in at least part of the calibration points in the overlapping area as determined in the second face, wherein the first plane and the second plane overlap at least in part from the perspective of the laser scanner,
- determining a deviation represented by at least one of a distance between the first and second plane and an angle (α) between the first and second plane,
- based on the deviation, determining calibration parameters,
- determining measuring points while taking into account the calibration parameters.

## Patentansprüche

1. Laserscanner (1), umfassend
- eine Basis (4);
- einen Körper (3), der auf der Basis montiert ist,
- einen ersten Motor (10), der zum Drehen des Körpers relativ zur Basis um eine Azimutachse (A) mit einer ersten Geschwindigkeit konfiguriert ist,
- einen ersten Drehgeber (8), der zum Bestimmen eines ersten Winkels des Körpers in Bezug auf die Azimutachse konfiguriert ist,
- einen Sender (6), der zum Senden eines Übertragungsstrahls (T) konfiguriert ist,
- einen Empfänger (7), der zum Detektieren eines Empfangsstrahls (R) konfiguriert ist,
- eine Ablenkeinrichtung (2), die in dem Körper montiert und konfiguriert ist zum
∘ Ablenken des Übertragungsstrahls vom Sender zu einer Umgebung,
∘ Ablenken des Empfangsstrahls von der Umgebung zum Empfänger,
- einen zweiten Motor (11), der zum Drehen der Ablenkeinrichtung relativ zum Körper um eine Höhenachse (E) mit einer zweiten Geschwindigkeit konfiguriert ist, wobei die zweite Geschwindigkeit höher als die erste Geschwindigkeit ist,
- einen zweiten Drehgeber (9), der zum Bestimmen eines zweiten Winkels der Ablenkeinrichtung in Bezug auf die Höhenachse konfiguriert ist,
- einen Prozessor (5), der konfiguriert ist zum
∘ Bestimmen einer Entfernung auf der Grundlage des gesendeten Übertragungsstrahls und des detektierten Empfangsstrahls,
∘ Bestimmen eines Punktes auf der Grundlage des ersten Winkels, des zweiten Winkels und der bestimmten Entfernung,
**dadurch gekennzeichnet, dass**
der Prozessor ferner konfiguriert ist zum
- Bestimmen einer Vielzahl von ersten Kalibrierungspunkten eines ersten Kalibrierbereichs (14) der Umgebung auf einer ersten Fläche,
- Bestimmen einer Vielzahl von zweiten Kalibrierungspunkten des ersten Kalibrierbereichs (14) auf einer zweiten Fläche, wobei sich die erste Fläche von der zweiten Fläche in einer Verschiebung von 180° einer azimutalen Ausrichtung des Körpers (3) unterscheidet
- Bestimmen einer ersten Abweichung zwischen
∘ zumindest einem Teil des ersten Kalibrierungsbereichs, wie mit den ersten Kalibrierungspunkten bestimmt, und
∘ zumindest einem Teil des ersten Kalibrierungsbereichs, wie mit den zweiten Kalibrierungspunkten bestimmt, und
- auf der Grundlage der ersten Abweichung, Bestimmen von ersten Kalibrierungsparametern, wobei das Bestimmen des Punktes ferner auf den ersten Kalibrierungsparametern basiert.

2. Laserscanner (1) nach Anspruch 1, wobei das Bestimmen der ersten Abweichung auf einem Versatz zwischen einer ersten Oberfläche und einer zweiten Oberfläche basiert, wobei die erste Oberfläche auf den ersten Kalibrierungspunkten basiert und die zweite Oberfläche auf den zweiten Kalibrierungspunkten basiert.

3. Laserscanner (1) nach Anspruch 2, wobei die erste Oberfläche durch zumindest einige der ersten Kalibrierungspunkte verläuft.

4. Laserscanner (1) nach Anspruch 2 oder 3, wobei die zweite Oberfläche durch zumindest einige der zweiten Punkte verläuft.

5. Laserscanner (1) nach Anspruch 2, wobei der Prozessor (5) zum Anpassen einer ersten Ebene (15) an zumindest einen Teil der ersten Kalibrierungspunkte konfiguriert ist, wobei die erste Oberfläche die erste Ebene ist.

6. Laserscanner (1) nach Anspruch 2 oder 4, wobei der Prozessor (5) zum Anpassen einer zweiten Ebene (16) an zumindest einen Teil der zweiten Kalibrierungspunkte konfiguriert ist, wobei die zweite Oberfläche die zweite Ebene ist.

7. Laserscanner (1) nach Anspruch 5 und 6, wobei der Prozessor (5) dazu konfiguriert ist, einen Winkel (α) zwischen der ersten Ebene (15) und der zweiten Ebene (16) zu bestimmen, wobei das Kalibrieren ferner auf dem Winkel basiert.

8. Laserscanner (1) nach einem der vorhergehenden Ansprüche, wobei der Prozessor (5) ferner konfiguriert ist zum
- Bestimmen, insbesondere mit einem Rundumscan, einer Vielzahl von ersten Erkennungspunkten eines Erkennungsbereichs der Umgebung auf der ersten Fläche, wobei der Erkennungsbereich den ersten Kalibrierungsbereich (14) umfasst, wobei insbesondere die ersten Erkennungspunkte die ersten Kalibrierungspunkte umfassen,
- Bestimmen zumindest eines ersten Kalibrierungsbereichskandidaten und
- Erzeugen oder Empfangen einer Auswahl zumindest des ersten Kalibrierungsbereichs aus den Kalibrierungsbereichskandidaten.

9. Laserscanner (1) nach Anspruch 8, wobei das Bestimmen des zumindest einen Kalibrierungsbereichskandidaten auf einer Analyse der Erkennungspunkte basiert.

10. Laserscanner (1) nach Anspruch 9, wobei die Analyse der Erkennungspunkte auf Folgendem basiert:
- zumindest einem Verteilungskriterium der Entfernungen und zweiten Winkel der jeweiligen im Kalibrierungsbereichskandidaten befindlichen Erkennungspunkte und/oder
- zumindest einem Anpassungskriterium, das ein Anpassen einer Ebene an mindestens einen Teil der jeweiligen im Kalibrierungsbereichskandidaten befindlichen Erkennungspunkte betrifft.

11. Laserscanner (1) nach Anspruch 10, wobei die Auswahl auf einer Gewichtung basiert, die dem Kalibrierungsbereichskandidaten zugeordnet ist, wobei der Prozessor (5) zum Bestimmen der Gewichtung auf der Grundlage von zumindest einem von Folgendem konfiguriert ist:
- wie die jeweiligen im Kalibrierungsbereichskandidaten befindlichen Erkennungspunkte das zumindest eine Verteilungskriterium quantitativ erfüllen,
- wie die jeweiligen im Kalibrierungsbereichskandidaten befindlichen Erkennungspunkte das zumindest eine Anpassungskriterium quantitativ erfüllen, und
- einer Messqualität der jeweiligen im Kalibrierungsbereichskandidaten befindlichen Erkennungspunkte in Bezug auf eine Empfangsstrahlqualität und/oder eine Empfangsstrahlintensität.

12. Laserscanner (1) nach einem der Ansprüche 8 bis 11, wobei der Prozessor (5) ferner konfiguriert ist zum
- Bestimmen, insbesondere mit einem Rundumscan, einer Vielzahl von zweiten Erkennungspunkten des Erkennungsbereichs der Umgebung auf der zweiten Fläche, wobei die zweiten Erkennungspunkte die zweiten Kalibrierungspunkte umfassen.

13. Laserscanner (1) nach einem der Ansprüche 8 bis 11, wobei der Prozessor (5) ferner konfiguriert ist zum
- Bestimmen zumindest eines zweiten Kalibrierungsbereichskandidaten und
- Erzeugen oder Empfangen einer Auswahl zumindest des zweiten Kalibrierungsbereichs aus den Kalibrierungsbereichskandidaten,
- wobei die ersten Erkennungspunkte im zweiten Kalibrierungsbereich als dritte Kalibrierungspunkte definiert sind,
- Bestimmen einer Vielzahl von vierten Kalibrierungspunkten des zweiten Kalibrierungsbereichs auf der zweiten Fläche,
- Bestimmen einer zweiten Abweichung zwischen
∘ zumindest einem Teil des zweiten Kalibrierungsbereichs, wie mit den dritten Kalibrierungspunkten bestimmt, und
∘ zumindest einem Teil des zweiten Kalibrierungsbereichs, wie mit den vierten Kalibrierungspunkten bestimmt, und
- auf der Grundlage der zweiten Abweichung, Bestimmen von zweiten Kalibrierungsparametern, wobei das Bestimmen des Punktes ferner auf den zweiten Kalibrierungsparametern basiert.

14. Automatisches Kalibrierungsverfahren für einen Laserscanner (1) nach einem der vorhergehenden Ansprüche, wobei das Verfahren die folgenden Schritte des Laserscanners umfasst:
- Bestimmen einer Vielzahl von Kalibrierungspunkten durch Durchführen eines Rundumscans unter azimutaler Drehung des Körpers (3) derart, dass es zumindest einen Überlappungsbereich gibt, in dem auf einer ersten Fläche bestimmte Kalibrierungspunkte mit auf einer zweiten Fläche bestimmten Kalibrierungspunkten überlappen, wobei sich die erste Fläche von der zweiten Fläche in einer Verschiebung von 180° einer azimutalen Ausrichtung des Körpers (3) unterscheidet,
- Anpassen einer ersten Ebene (15) an zumindest einen Teil der Kalibrierungspunkte in dem Überlappungsbereich, wie auf der ersten Fläche bestimmt,
- Anpassen einer zweiten Ebene (16) an zumindest einen Teil der Kalibrierungspunkte in dem auf der zweiten Fläche bestimmten Überlappungsbereich, wobei die erste Ebene und die zweite Ebene zumindest teilweise aus der Perspektive des Laserscanners überlappen,
- Bestimmen einer Abweichung, die durch mindestens eines von einer Entfernung zwischen der ersten und der zweiten Ebene und einem Winkel (α) zwischen der ersten und der zweiten Ebene dargestellt wird,
- auf der Grundlage der Abweichung, Bestimmen von Kalibrierungsparametern,
- Bestimmen von Messpunkten unter Berücksichtigung der Kalibrierungsparameter.

## Revendications

1. Scanneur laser (1) comprenant
- une base (4)
- un corps (3) monté sur la base,
- un premier moteur (10) configuré pour faire tourner le corps par rapport à la base autour d'un axe d'azimut (A) avec une première vitesse,
- un premier codeur rotatif (8) configuré pour déterminer un premier angle du corps par rapport à l'axe d'azimut,
- un émetteur (6) configuré pour émettre un faisceau de transmission (T),
- un récepteur (7) configuré pour détecter un faisceau de réception (R),
- un déflecteur (2) monté dans le corps et configuré pour
o dévier le faisceau de transmission de l'émetteur vers un environnement,
o dévier le faisceau de réception de l'environnement vers le récepteur,
- un second moteur (11) configuré pour faire tourner le déflecteur par rapport au corps autour d'un axe d'élévation (E) avec une seconde vitesse, la seconde vitesse étant supérieure à la première vitesse,
- un second codeur rotatif (9) configuré pour déterminer un second angle du déflecteur par rapport à l'axe d'élévation,
- un processeur (5) configuré pour
o déterminer une distance sur la base du faisceau de transmission émis et du faisceau de réception détecté,
o déterminer un point sur la base du premier angle, du second angle et de la distance déterminée,
**caractérisé en ce que**
le processeur est en outre configuré pour
- déterminer une pluralité de premiers points d'étalonnage d'une première zone d'étalonnage (14) de l'environnement dans une première face,
- déterminer une pluralité de deuxièmes points d'étalonnage de la première zone d'étalonnage (14) dans une seconde face, dans lequel la première face diffère de la seconde face d'un déplacement de 180° d'un alignement azimutal du corps (3),
- déterminer un premier écart entre
o au moins une partie de la première zone d'étalonnage telle que déterminée avec les premiers points d'étalonnage et
o au moins une partie de la première zone d'étalonnage telle que déterminée avec les deuxièmes points d'étalonnage, et
- sur la base du premier écart, déterminer des premiers paramètres d'étalonnage, dans lequel la détermination du point est en outre basée sur les premiers paramètres d'étalonnage.

2. Scanneur laser (1) selon la revendication 1, dans lequel la détermination du premier écart est basée sur un décalage entre une première surface et une seconde surface, dans lequel la première surface est basée sur les premiers points d'étalonnage et la seconde surface est basée sur les deuxièmes points d'étalonnage.

3. Scanneur laser (1) selon la revendication 2, dans lequel la première surface traverse au moins certains des premiers points d'étalonnage.

4. Scanneur laser (1) selon la revendication 2 ou 3, dans lequel la seconde surface traverse au moins certains des deuxièmes points.

5. Scanneur laser (1) selon la revendication 2, dans lequel le processeur (5) est configuré pour ajuster un premier plan (15) dans au moins une partie des premiers points d'étalonnage, dans lequel la première surface est le premier plan.

6. Scanneur laser (1) selon la revendication 2 ou 4, dans lequel le processeur (5) est configuré pour ajuster un second plan (16) dans au moins une partie des deuxièmes points d'étalonnage, dans lequel la seconde surface est le second plan.

7. Scanneur laser (1) selon les revendications 5 et 6, dans lequel le processeur (5) est configuré pour déterminer un angle (α) entre le premier plan (15) et le second plan (16), dans lequel l'étalonnage est en outre basé sur l'angle.

8. Scanneur laser (1) selon l'une quelconque des revendications précédentes, dans lequel le processeur (5) est en outre configuré pour
- déterminer, en particulier avec un balayage complet de dôme, une pluralité de premiers points de découverte d'une zone de découverte de l'environnement dans la première face, dans lequel la zone de découverte comprend la première zone d'étalonnage (14), en particulier dans lequel les premiers points de découverte comprennent les premiers points d'étalonnage,
- déterminer au moins une première zone d'étalonnage candidate, et
- générer ou en recevoir une sélection d'au moins la première zone d'étalonnage parmi les zones d'étalonnage candidates.

9. Scanneur laser (1) selon la revendication 8, dans lequel la détermination de l'au moins une zone d'étalonnage candidate est basée sur une analyse des points de découverte.

10. Scanneur laser (1) selon la revendication 9, dans lequel l'analyse des points de découverte est basée sur
- au moins un critère de distribution des distances et de seconds angles des points de découverte respectifs situés dans la zone d'étalonnage candidate, et/ou
- au moins un critère d'ajustement qui concerne un ajustement d'un plan dans au moins une partie des points de découverte respectifs situés dans la zone d'étalonnage candidate.

11. Scanneur laser (1) selon la revendication 10, dans lequel la sélection est basée sur une pondération attribuée à la zone d'étalonnage candidate, dans lequel le processeur (5) est configuré pour déterminer la pondération sur la base d'au moins l'un des éléments suivants :
- la manière dont les points de découverte respectifs situés dans la zone d'étalonnage candidate satisfont quantitativement l'au moins un critère de distribution,
- a manière dont les points de découverte respectifs situés dans la zone d'étalonnage candidate satisfont quantitativement l'au moins un critère d'ajustement, et
- une qualité de mesure des points de découverte respectifs situés dans la zone d'étalonnage candidate en ce qui concerne une qualité de faisceau de réception et/ou une intensité de faisceau de réception.

12. Scanneur laser (1) selon l'une quelconque des revendications 8 à 11, dans lequel le processeur (5) est en outre configuré pour
- déterminer, en particulier avec un balayage de dôme complet, une pluralité de deuxièmes points de découverte de la zone de découverte de l'environnement dans la seconde face, dans lequel les deuxièmes points de découverte comprennent les deuxièmes points d'étalonnage.

13. Scanneur laser (1) selon l'une quelconque des revendications 8 à 11, dans lequel le processeur (5) est en outre configuré pour
- déterminer au moins une seconde zone d'étalonnage candidate, et
- générer ou recevoir une sélection d'au moins la seconde zone d'étalonnage parmi les zones d'étalonnage candidates,
- dans lequel des premiers points de découverte dans la seconde zone d'étalonnage sont définis comme des troisièmes points d'étalonnage,
- déterminer une pluralité de quatrièmes points d'étalonnage de la seconde zone d'étalonnage dans la seconde face,
- déterminer un second écart entre
o au moins une partie de la seconde zone d'étalonnage telle que déterminée avec les troisièmes points d'étalonnage et
o au moins une partie de la seconde zone d'étalonnage telle que déterminée avec les quatrièmes points d'étalonnage, et
- sur la base du second écart, déterminer des seconds paramètres d'étalonnage, dans lequel la détermination du point est en outre basée sur les seconds paramètres d'étalonnage.

14. Procédé d'étalonnage automatique pour un scanneur laser (1) selon l'une quelconque des revendications précédentes, le procédé comprenant les étapes du scanneur laser :
- détermination d'une pluralité de points d'étalonnage en effectuant un balayage de dôme complet tout en tournant azimutalement le corps (3) de sorte qu'il existe au moins une zone de chevauchement dans laquelle des points d'étalonnage déterminés dans une première face chevauchent des points d'étalonnage déterminés dans une seconde face, dans lequel la première face diffère de la seconde face d'un déplacement de 180° d'un alignement azimutal du corps (3),
- ajustement d'un premier plan (15) dans au moins une partie des points d'étalonnage dans la zone de chevauchement tels que déterminés dans la première face,
- ajustement d'un second plan (16) à au moins une partie des points d'étalonnage dans la zone de chevauchement tels que déterminés dans la seconde face, dans lequel le premier plan et le second plan se chevauchent au moins en partie du point de vue du scanneur laser,
- détermination d'un écart représenté par au moins l'un parmi une distance entre le premier et le second plan et un angle (α) entre le premier et le second plan,
- sur la base de l'écart, détermination de paramètres d'étalonnage,
- détermination de points de mesure en tenant compte des paramètres d'étalonnage.
